(19) Europäisches Patentamt
European Patent Office
Office européen des brevets

(11) **EP 4 592 726 A2**

(12) **EUROPEAN PATENT APPLICATION**

(43) Date of publication:
**30.07.2025 Bulletin 2025/31**

(21) Application number: 24216765.8

(22) Date of filing: **02.12.2024**

(51) International Patent Classification (IPC):
**G02B 7/02** (2021.01)   **G02B 13/00** (2006.01)
**G02B 27/00** (2006.01)   **H04N 23/55** (2023.01)
**G02B 5/00** (2006.01)

(52) Cooperative Patent Classification (CPC):
**G02B 7/021; G02B 13/001; G02B 27/0018; H04N 23/55;** G02B 5/003

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 US 202363615656 P**

(71) Applicant: **Largan Precision Co. Ltd.**
**Taichung City, R.O.C. (TW)**

(72) Inventors:
• **CHENG, Jyun-Jia**
  **Taichung City, R.O.C. (TW)**
• **FAN, Chen Wei**
  **Taichung City, R.O.C. (TW)**
• **LIN, Cheng-Feng**
  **Taichung City, R.O.C. (TW)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **IMAGING LENS SYSTEM AND ELECTRONIC DEVICE**

(57)    An imaging lens system (1) includes an optical element (10) being a lighttransmitting element including an optical effective portion (11) and a peripheral portion (12). The optical effective portion (11) includes an incident surface (111) and an exit surface (112). An imaging light enters the optical element (10) through the incident surface (111) and exits the optical element (10) through the exit surface (112). The peripheral portion (12) is located farther away from an optical axis (OL) of the imaging lens system (1) than the optical effective portion (11). The peripheral portion (12) includes at least one connection surface (120) connected to the incident surface (111) and the exit surface (112), and a plurality of air barriers (123) disposed on at least part of surfaces of the peripheral portion (12) and recessed toward the optical axis (OL) from the at least part of the surfaces of the peripheral portion (12). Recessed shapes of the air barriers (123) include at least one of a point-like form and a line-like form.

FIG. 3

**Description**

**BACKGROUND**

Technical Field

The present disclosure relates to an imaging lens system and an electronic device, more particularly to an imaging lens system applicable to an electronic device.

Description of Related Art

With the development of semiconductor manufacturing technology, the performance of image sensors has been improved, and the pixel size thereof has been scaled down. Therefore, featuring high image quality becomes one of the indispensable features of an optical system nowadays. Furthermore, due to the rapid changes in technology, smartphone devices equipped with optical systems are trending towards multi-functionality for various applications, and therefore the functionality requirements for the optical systems have been increasing.

Generally, the peripheral surfaces at non-effective regions of optical elements, such as optical lens elements and optical reflective prisms in optical lenses, tend to have higher reflectivity, making it difficult to effectively reduce non-imaging light incident on the peripheral surfaces. Especially when the peripheral surfaces are smooth planes, as non-imaging light that reaches the peripheral surfaces would be reflected onto the image surface, generating stray light and degrading image quality. On the other hand, optical elements are typically produced using injection molding, and a gate trace is a cut mark corresponding to the runner of the gating system on the optical element. The gate trace is usually located on the peripheral surfaces of the non-effective regions of the optical element. Due to the uneven surface of the gate trace caused by the cutting process, non-imaging light may be reflected off the gate trace, becoming stray light and thus affecting image quality.

**SUMMARY**

According to one aspect of the present disclosure, an imaging lens system includes an optical element being a light-transmitting element. The optical element includes an optical effective portion and a peripheral portion. The optical effective portion includes an incident surface and an exit surface. An imaging light enters the optical element through the incident surface, and the imaging light exits the optical element through the exit surface. The peripheral portion is located farther away from an optical axis of the imaging lens system than the optical effective portion. Preferably, the peripheral portion includes at least one connection surface, a reduction surface, a gate trace and a plurality of air barriers. Preferably, the connection surface is connected to the incident surface and the exit surface. Preferably, the reduction surface is adjacently connected to the connection surface and located closer to the optical axis than the connection surface. Preferably, the gate trace is disposed on the reduction surface. Preferably, the air barriers are disposed at least on the gate trace and recessed toward the optical axis. Preferably, recessed shapes of the air barriers include at least one of a point-like form and a line-like form. When a recessed width of each of the plurality of air barriers is Wab, the following condition is preferably satisfied: 0.008 mm ≤ Wab ≤ 0.07 mm.

According to another aspect of the present disclosure, an imaging lens system includes an optical element being a light-transmitting element. The optical element includes an optical effective portion and a peripheral portion. The optical effective portion includes an incident surface and an exit surface. An imaging light enters the optical element through the incident surface, and the imaging light exits the optical element through the exit surface. The peripheral portion is located farther away from an optical axis of the imaging lens system than the optical effective portion. Preferably, the peripheral portion includes at least one connection surface and a plurality of air barriers. Preferably, the connection surface is connected to the incident surface and the exit surface. Preferably, the air barriers are disposed on at least part of surfaces of the peripheral portion and recessed toward the optical axis from the at least part of the surfaces of the peripheral portion. Preferably, recessed shapes of the air barriers include at least one of a point-like form and a line-like form.

According to another aspect of the present disclosure, an electronic device includes one of the aforementioned imaging lens systems.

**BRIEF DESCRIPTION OF THE DRAWINGS**

The disclosure can be better understood by reading the following detailed description of the embodiments, with reference made to the accompanying drawings as follows:

Fig. 1 is a perspective view of an imaging lens system according to the 1st embodiment of the present disclosure;

Fig. 2 shows a cross-sectional view along with a partial enlarged view of the imaging lens system in Fig. 1;

Fig. 3 shows a perspective view along with a partial enlarged view of an optical element of the imaging lens system in Fig. 1;

Fig. 4 shows a cross-sectional view along with a partial enlarged view of the optical element in Fig. 3;

Fig. 5 shows an image side view along with a partial enlarged view of the optical element in Fig. 3;

Fig. 6 shows a top view along with a partial enlarged view of the optical element in Fig. 3;

Fig. 7 is a side view of the optical element in Fig. 3;

Fig. 8 shows a perspective view along with a partial enlarged view of an optical element according to another configuration of the present disclosure;

Fig. 9 shows a side view along with a partial enlarged view of the optical element in Fig. 8;

Fig. 10 is a perspective view of an imaging lens system according to the 2nd embodiment of the present disclosure;

Fig. 11 shows a cross-sectional view along with a partial enlarged view of the imaging lens system in Fig. 10;

Fig. 12 shows a perspective view along with a partial enlarged view of an optical element of the imaging lens system in Fig. 10;

Fig. 13 is an image side view of the optical element in Fig. 12;

Fig. 14 shows a side view along with a partial enlarged view of the optical element in Fig. 12;

Fig. 15 is a side view of the optical element in Fig. 12;

Fig. 16 shows a partial enlarged view of a peripheral portion of an optical element and its air barriers according to another configuration of the present disclosure;

Fig. 17 shows a partial enlarged view of a peripheral portion of an optical element and its air barriers according to another configuration of the present disclosure;

Fig. 18 shows a partial enlarged view of a peripheral portion of an optical element and its air barriers according to another configuration of the present disclosure;

Fig. 19 shows a partial enlarged view of a peripheral portion of an optical element and its air barriers according to another configuration of the present disclosure;

Fig. 20 shows a partial enlarged view of a peripheral portion of an optical element and its air barriers according to another configuration of the present disclosure;

Fig. 21 is a perspective view of an imaging lens system according to the 3rd embodiment of the present disclosure;

Fig. 22 shows a cross-sectional view of the imaging lens system in Fig. 21;

Fig. 23 shows a perspective view along with a partial enlarged view of an optical element of the imaging lens system in Fig. 21;

Fig. 24 shows a side view along with a partial enlarged view of the optical element in Fig. 23;

Fig. 25 shows a perspective view along with a partial enlarged view of an optical element according to one configuration of the present disclosure, with air barriers formed by laser focusing on a gate trace for processing;

Fig. 26 is a perspective view of an electronic device according to the 4th embodiment of the present disclosure;

Fig. 27 is another perspective view of the electronic device in Fig. 26;

Fig. 28 is an illustration of an image captured by an ultra-wide-angle imaging lens system;

Fig. 29 is an illustration of an image captured by a high pixel imaging lens system;

Fig. 30 is an illustration of an image captured by a telephoto imaging lens system;

Fig. 31 is a perspective view of an electronic device according to the 5th embodiment of the present disclosure;

Fig. 32 is a perspective view of an electronic device according to the 6th embodiment of the present disclosure;

Fig. 33 is a side view of the electronic device in Fig. 40; and

Fig. 34 is a top view of the electronic device in Fig. 32.

## DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The present disclosure provides an imaging lens system. The imaging lens system includes an optical element being a light-transmitting element. Moreover, optical element can be, for example, a plastic lens element, molded glass lens element, ground glass lens element, plastic prism, glass prism, optical filter, or other components with optical functions.

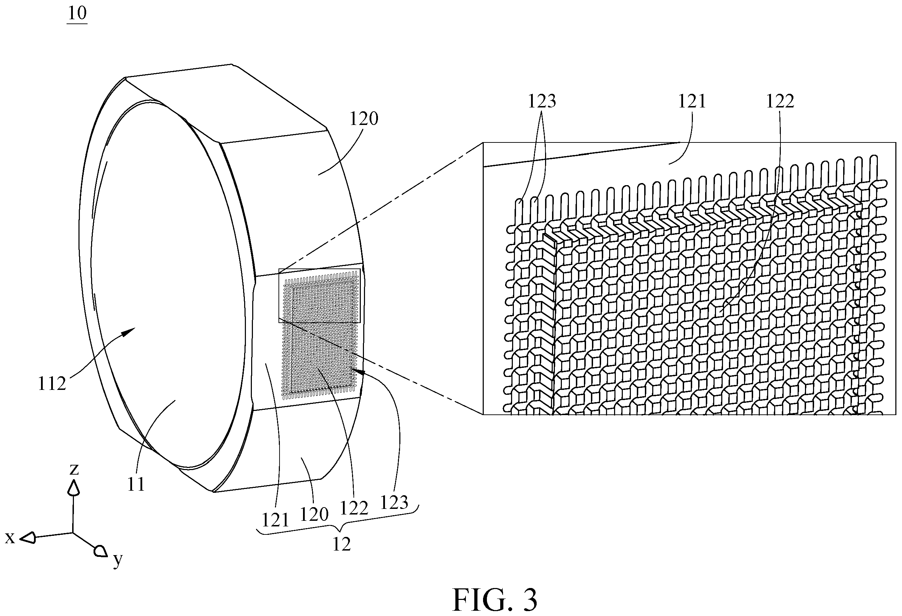

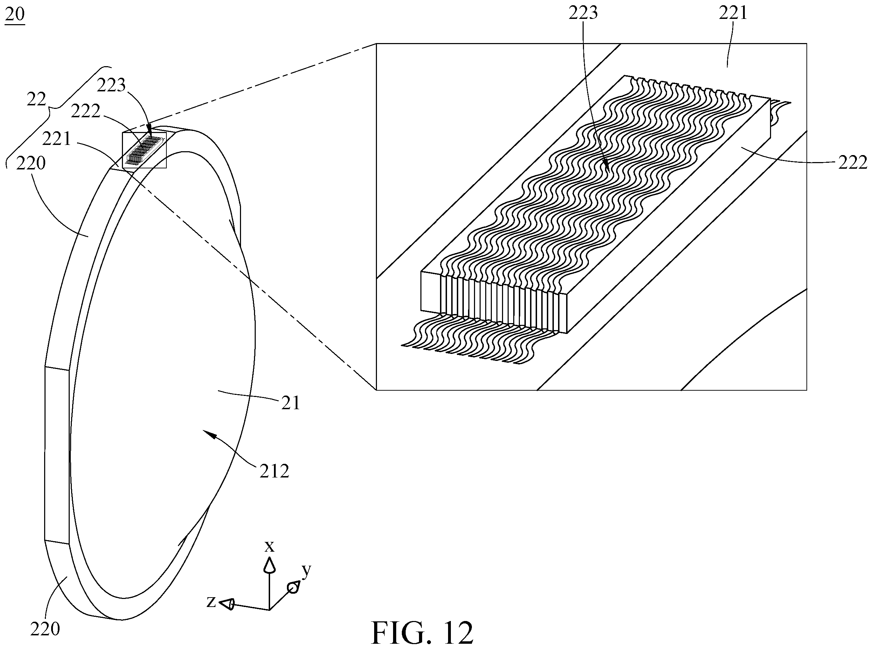

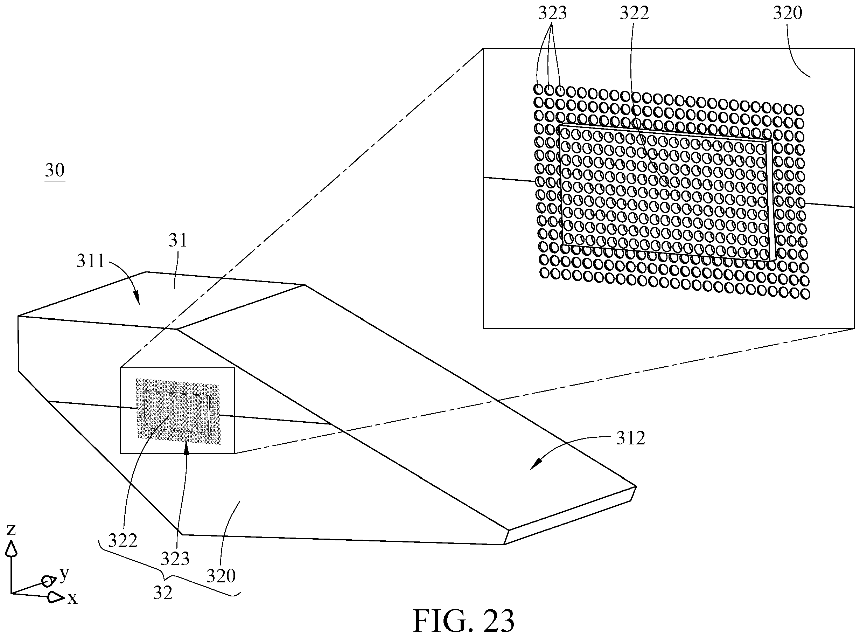

The optical element includes an optical effective portion and a peripheral portion. The optical effective portion includes an incident surface and an exit surface. An imaging light enters the optical element through the incident surface, and the imaging light exits the optical element through the exit surface. The peripheral portion is located farther away from an optical axis of the imaging lens system than the optical effective portion, and the peripheral portion includes at least one connection surface and a plurality of air barriers. The at least one connection surface is connected to the incident surface and the exit surface. The air barriers are disposed on at least part of surfaces of the peripheral portion, and the air barriers are recessed toward the optical axis from the at least part of the surfaces of the peripheral portion. Moreover, recessed shapes of the air barriers include at least one of a point-like form and a line-like form. Therefore, the air barriers recessed towards an interior of the optical element from the surface(s) where the air barriers are disposed is favorable for blocking the reflection paths of stray light on the surface(s) of the peripheral portion to prevent stray light from affecting the image and ensure image quality. In configurations where recessed shapes are each a line-like form, the recessed shapes can be, for example, straight-line shapes (as shown in Fig. 3) or curved-line shapes (as shown in Fig. 12). In configurations where recessed shapes are each a point-like form, the recessed shapes can be, for example, circular (as shown in Fig. 23) or oval.

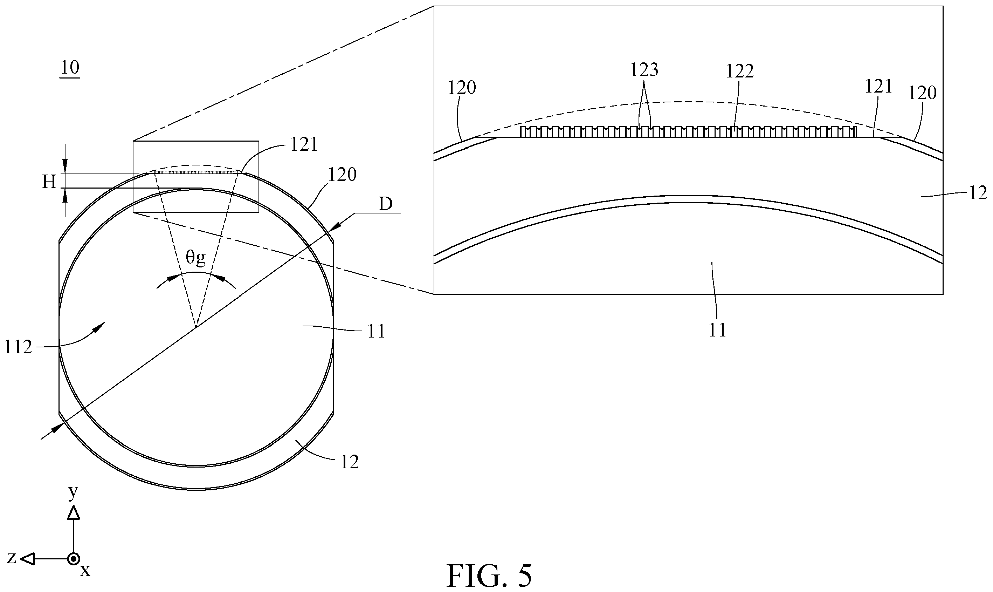

In one configuration, the peripheral portion can further include a reduction surface that can be adjacently connected to the connection surface and located closer to the optical axis than the connection surface. Therefore, it is favorable for reducing the size of the optical element. Moreover, the air barriers can be disposed on the reduction surface. Therefore, the air barriers recessed from the reduction surface towards the interior of the optical element is favorable for blocking the reflection paths of stray light on the reduction surface to prevent stray light from affecting the image and ensure image quality. Please refer to Fig. 5, which shows an image side view along with a partial enlarged view of an optical element of an imaging lens system according to the 1st embodiment of the present disclosure. The dashed line in the partial enlarged view of Fig. 5 is the extension line of the contour of the adjacent connection surfaces 120, from which it can be seen that the reduction surface 121 is closer to the optical axis compared to the connection surfaces 120 adjacent thereto.

In another configuration, the peripheral portion can further include a gate trace disposed on the connection surface. Moreover, the air barriers can be disposed on the connection surface. Therefore, the air barriers recessed from the connection surface towards the interior of the optical element is favorable for blocking the reflection paths of stray light on the connection surface to prevent stray light from affecting the image and ensure image quality. Please refer to Fig. 23, which shows a perspective view along with a partial enlarged view of an optical element of an imaging lens system according to the 3rd embodiment of the present disclosure. It can be seen that the gate trace 322 is disposed on the connection surface 320. Moreover, the surface of the gate trace can be further coated with light-absorbing materials, and the light-absorbing materials can include dark ink, UV-curable coatings, acrylic paint, carbon black, metal oxides, or other materials capable of reducing light reflection, but the present disclosure is not limited thereto.

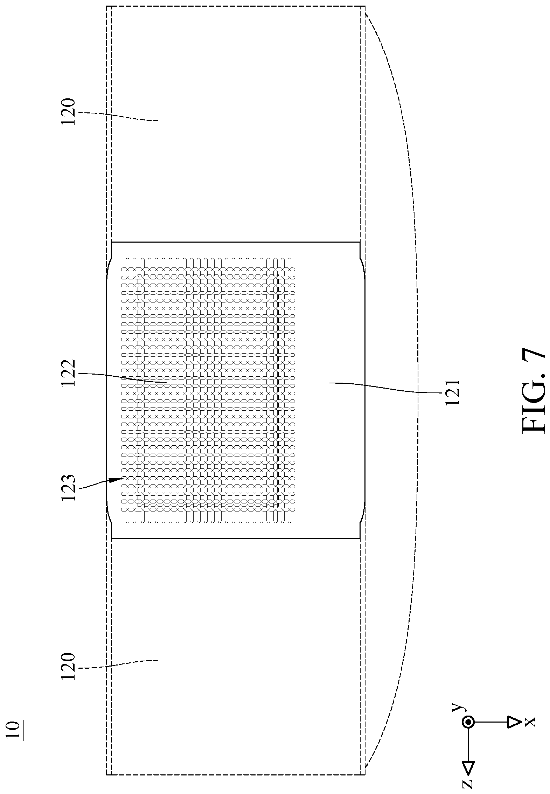

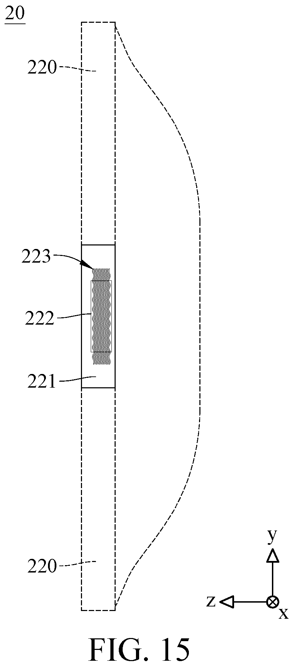

In another configuration, the peripheral portion can further include a reduction surface and a gate trace. Moreover, the reduction surface can be adjacently connected to the connection surface and located closer to the optical axis than the connection surface. Moreover, the gate trace can be disposed on the reduction surface, and the air barriers can be disposed at least on the gate trace. Therefore, the air barriers recessed from the surface of the gate trace towards the interior of the optical element is favorable for blocking the reflection paths of stray light on the gate trace to prevent stray light from affecting the image and ensure image quality. Moreover, when an area of the reduction surface is Ar, and a total area occupied by both the gate trace and the air barriers on the reduction surface is Ag, the following condition can be satisfied: $0.2 < Ag/Ar \leq 1$. Therefore, it is favorable for reducing the reflection of stray light on the reduction surface. Moreover, the air barriers can extend from the gate trace on the reduction surface to other areas of the reduction surface or to the connection surface. Therefore, it is favorable for reducing the reflection of stray light. Please refer to Fig. 3, which shows a perspective view along with a partial enlarged view of the optical element of the imaging lens system according to the 1st embodiment of the present disclosure. As shown in Fig. 3, in some configurations, the air barriers 123 are in a grid pattern, and the area where the air barriers 123 are disposed covers the gate trace 122 and further extends to the reduction surface 121 surrounding the gate trace 122. Please refer to Fig. 7 and Fig. 15, which respectively show a side view of an optical element of an imaging lens system according to the 1st embodiment and the 2nd embodiment of the present disclosure. Fig. 7 and Fig. 15 clearly show the area ratio between the gate trace 122, the air barriers 123, and the reduction surface 121, as well as the area ratio between the gate trace 222, the air barriers 223, and the reduction surface 221 according to different examples, respectively.

Regarding the areas of the reduction surface, the gate trace, and the air barriers, image analysis can be adopted to determine the coverage area proportions of the gate trace and the air barriers on the reduction surface. For example, since the original reduction surface is flat and smooth, the reduction surface exhibits a gloss distinct from the uneven gate trace and air barriers, allowing for the calculation of the covered areas. However, the present disclosure is not limited to the aforementioned analysis method. For instance, area calculations can also be performed using instruments that analyze surface properties, such as roughness measurement tools.

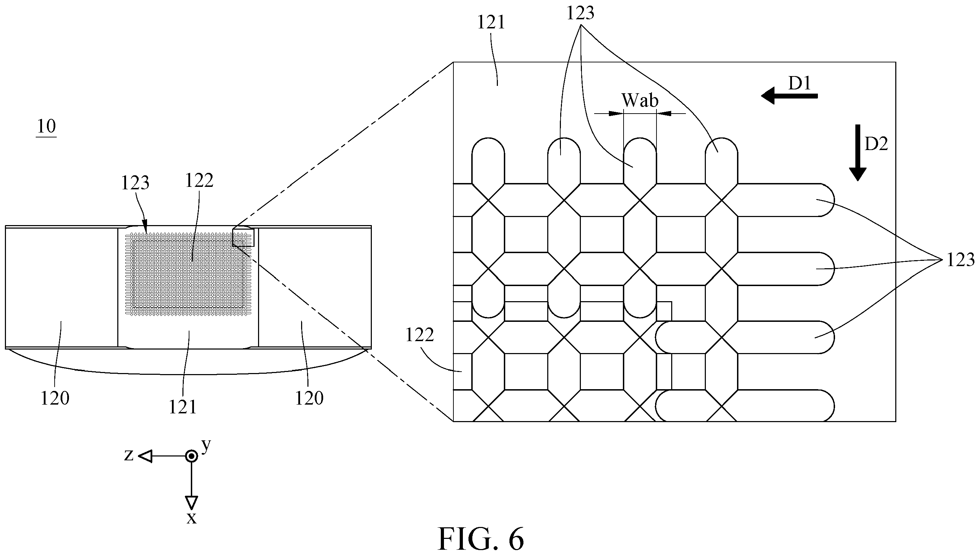

When a recessed width of each of the plurality of air barriers is Wab, the following condition can be satisfied: $0.008 \text{ mm} \leq Wab \leq 0.07 \text{ mm}$. Therefore, it is favorable for effectively blocking the reflection path of stray light. Moreover, when the recessed shapes of the air barriers are each a line-like form, the recessed width refers to a line width; when the recessed shapes of the air barriers are each a point-like form, the recessed width refers to a point diameter. Moreover, the following condition can also be satisfied: $0.012 \text{ mm} \leq Wab \leq 0.05 \text{ mm}$. Please refer to Fig. 6, which shows a schematic view of Wab according to the 1st embodiment of the present disclosure. Moreover, regarding the recessed width of the air barrier, contours of the line-like or point-like recesses may become difficult to be distinguished because the surface, where the air barrier are disposed, is uneven. For example, a straight-line contour may exhibit slight curvature, or a circular contour may become elliptical. In such cases, the recessed width of the air barrier can instead be measured or calculated from areas where the contours are more clearly recognizable, such as identifying the recessed shapes on the flatter peripheral regions of the reduction surface to measure or calculate the recessed width.

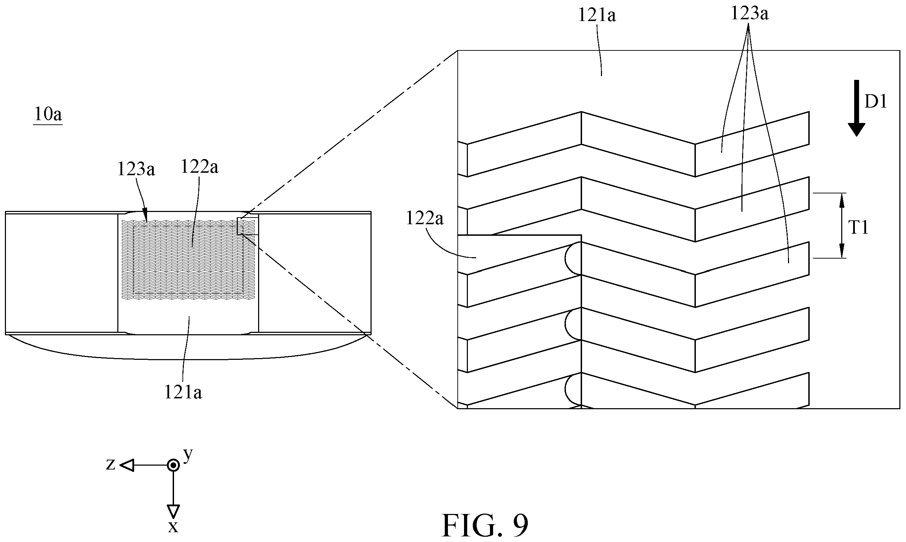

The air barriers can be arranged regularly along a first direction. Therefore, it is favorable for controlling production quality. Please refer to Fig. 6 and Fig. 9, which respectively show a side view along with a partial enlarged view of an optical element in various configurations of the imaging lens system according to the 1st embodiment of the present disclosure. As shown in Fig. 6 and Fig. 9, the air barriers 123 are arranged regularly along the first direction D1, and the air barriers 123a are arranged regularly along the first direction D1.

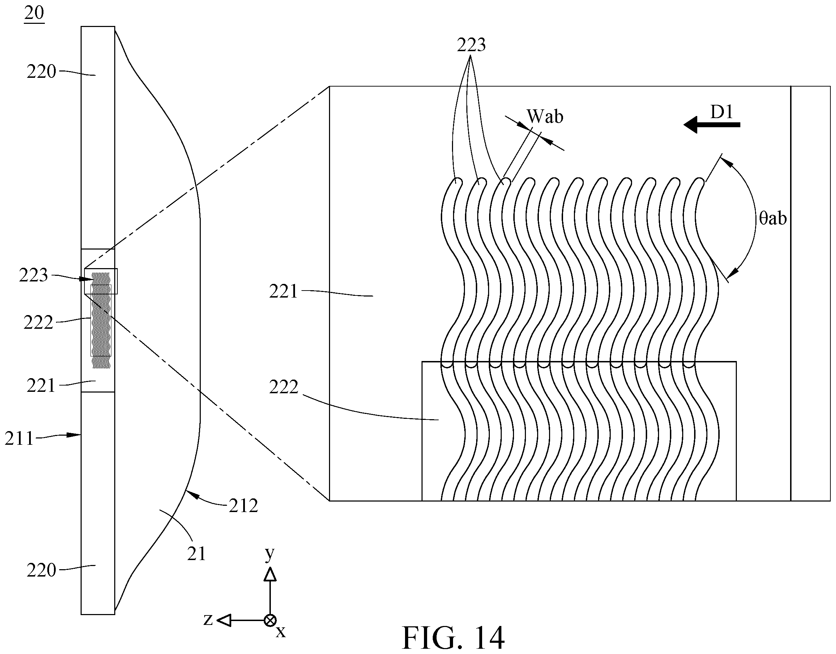

The recessed shapes of the air barriers can be curved-line shapes. Therefore, it is favorable for blocking stray light incident from different directions while also reducing the manufacturing process. Moreover, when a minimum angle formed by each of the curved-line shapes of the air barriers is $\theta ab$, the following condition can be satisfied: 50 degrees < $\theta ab$ < 180 degrees. Please refer to Fig. 12 and Fig. 14, which respectively show a perspective view along with a partial enlarged view and a side view along with a partial enlarged view of an optical element of the imaging lens system according to the 2nd embodiment of the present disclosure. As seen, the recessed shapes of the air barriers 223 are curved-line shapes. In addition, Fig. 14 shows a schematic view of $\theta ab$ according to the 2nd embodiment of the present disclosure.

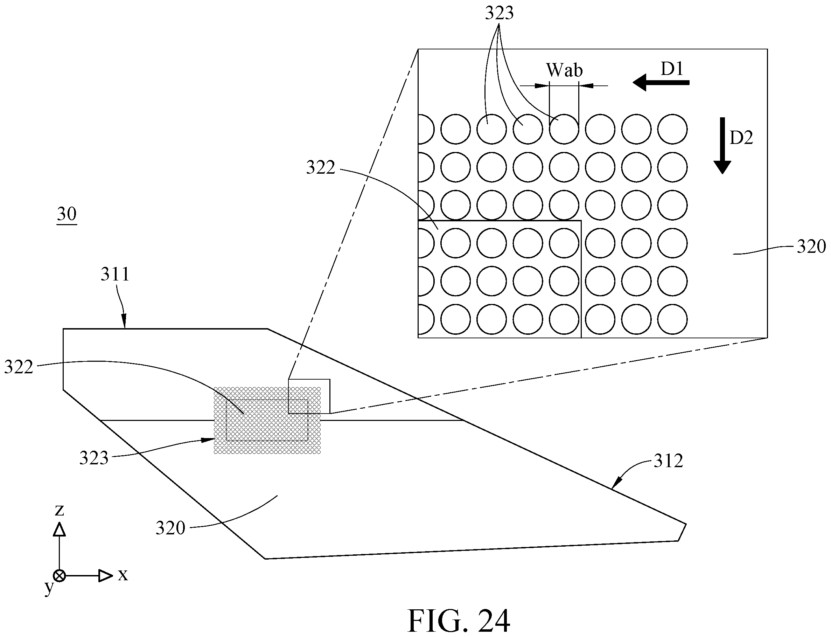

The air barriers can be further arranged regularly along a second direction which is different from the first direction. Therefore, the air barriers arranged in at least two directions is favorable for blocking stray light incident from different directions. Moreover, extension paths of at least two of the air barriers can intersect with each other. Therefore, it is favorable for blocking stray light incident from different directions. Moreover, the pattern formed by the intersection between the extension directions of the air barriers can be a grid or diamond shape, but the present disclosure is not limited thereto. Please refer to Fig. 6 and Fig. 24, which respectively show a side view along with a partial enlarged view of an optical element in various configurations of the imaging lens system according to the 1st embodiment and 3rd embodiment of the present disclosure. As can be seen that the air barriers 123 are arranged regularly along the first direction D1 and the second direction D2, and the air barriers 323 are arranged regularly along the first direction D1 and the second direction D2. In addition, as shown in Fig. 6, the extension directions of the air barriers 123 intersect with each other, and the air barriers 123 form a grid-like pattern.

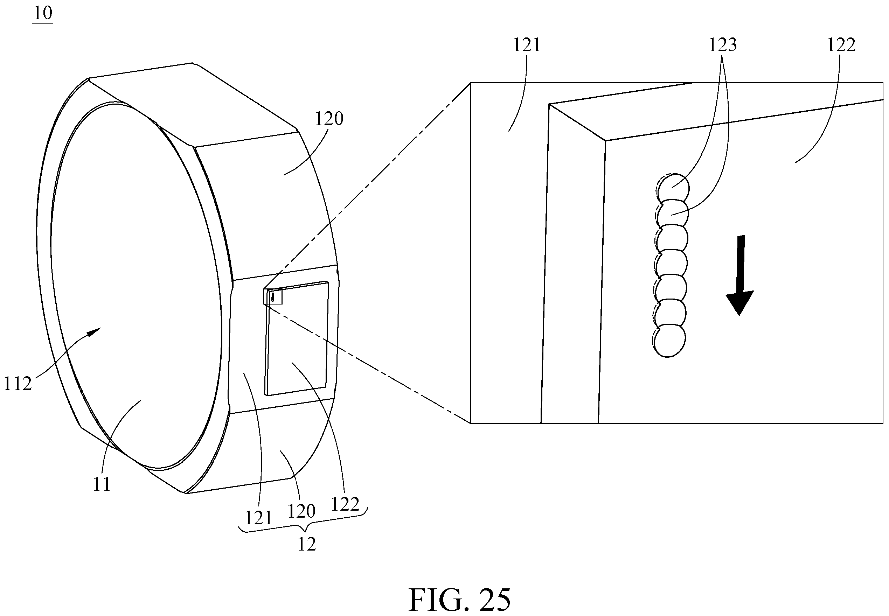

The recessed shapes of the air barriers can be each a line-like form, formed by a plurality of continuously arranged point-shaped recesses. For example, please refer to Fig. 25, which shows a perspective view along with a partial enlarged view of an optical element according to one configuration of the present disclosure, with air barriers formed by laser focusing on a gate trace for processing. Regarding the method for forming the air barriers 123, a laser can be focused on a point on the surface of the peripheral portion 12 (such as the connection surface 120, the reduction surface 121, and/or the gate trace 122 on the reduction surface 121), melting the surface of the peripheral portion 12 to form a point-shaped air barrier 123. Then, for example, laser dot-matrix processing can be performed along a path such as the path shown by the arrow in Fig. 25. When the dot-matrix arrangement is sufficiently dense, the contour of the air barriers 123 may approximate a continuous path. It should be noted that the gate trace 122 in Fig. 25 is illustrated as a rectangular block for ease of representation, but the present disclosure is not limited to the shape of the gate trace. For instance, in actual situations, the gate trace may have uneven surface variations due to irregular cutting, resulting in a surface that is not smooth.

When a sweep angle of the gate trace with the optical axis as a center is $\theta g$, the following condition can be satisfied: 14 degrees $\leq \theta g \leq$ 45 degrees. Moreover, the following condition can also be satisfied: 14 degrees < $\theta g$ < 45 degrees. Therefore, it is favorable for improving the injection molding quality of the optical element. Please refer to Fig. 5, which shows a schematic view of $\theta g$ according to the 1st embodiment of the present disclosure.

When a maximum outer diameter of the optical element in a direction perpendicular to the optical axis is D, and a shortest distance between the gate trace and the exit surface in the direction perpendicular to the optical axis is H, the following condition can be satisfied: 0.01 < H/D < 0.2. Therefore, it is favorable for the miniaturized design of the lens. Please refer to Fig. 5, which shows a schematic view of D and H according to the 1st embodiment of the present disclosure.

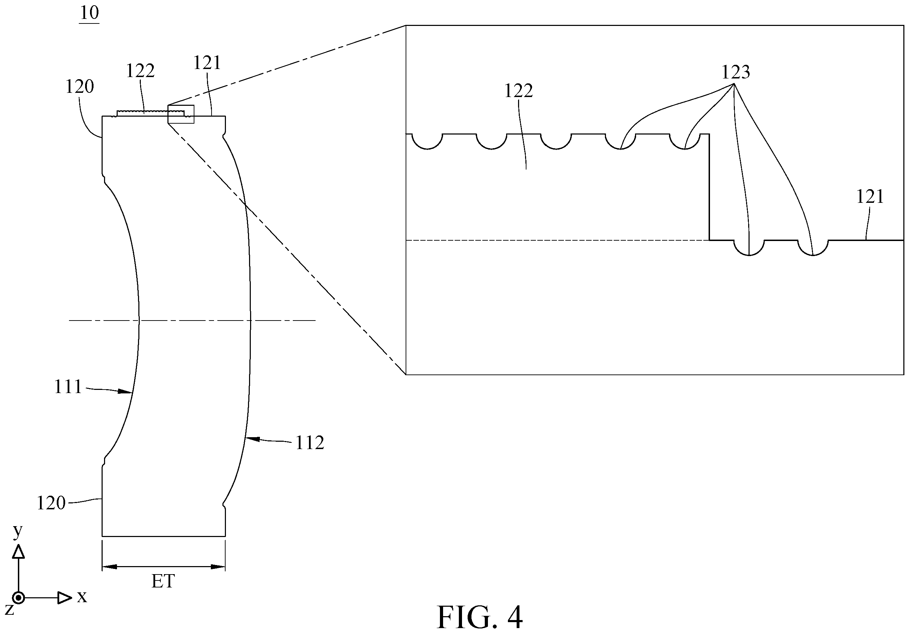

When a thickness of the peripheral portion in a direction parallel to the optical axis is ET, and the maximum outer diameter of the optical element in the direction perpendicular to the optical axis is D, the following condition can be satisfied: 1.6 < D/ET < 8.8. Therefore, it is favorable for enhancing the optical refractive power. Please refer to Fig. 4 and Fig. 5, which respectively show a schematic view of ET and D according to the 1st embodiment of the present disclosure. In Fig. 4, the cross-section of the air barrier 123 is U-shaped, but the present disclosure is not limited thereto. For example, depending on the type of laser and parameter settings, the cross-section of the air barrier can also be V-shaped or trapezoidal, but the present disclosure is not limited thereto.

At least one of the incident surface and the exit surface of the optical effective portion can be non-circular. Therefore, it is favorable for the miniaturized design of the lens.

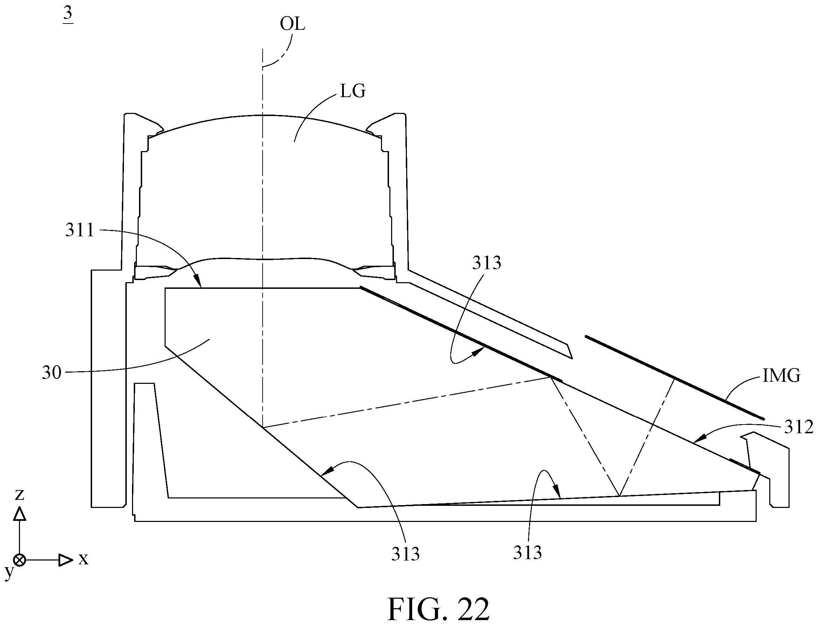

The optical effective portion can further include a reflection surface configured to change a travelling direction of the imaging light. Please refer to Fig. 22, which shows a cross-sectional view of the imaging lens system according to the 3rd embodiment of the present disclosure. As can be seen that the optical element 30 is a prism having a reflection surface 313, and the reflection surface 313 can be located between the incident surface 311 and the exit surface 312 along an optical path, and the reflection surface 313 is configured to change the travelling direction of the imaging light.

According to the present disclosure, an electronic device is provided. The electronic device includes the aforementioned imaging lens system.

According to the present disclosure, the aforementioned features and conditions can be utilized in numerous combinations so as to achieve corresponding effects.

According to the above description of the present disclosure, the following specific embodiments are provided for further explanation.

## 1st Embodiment

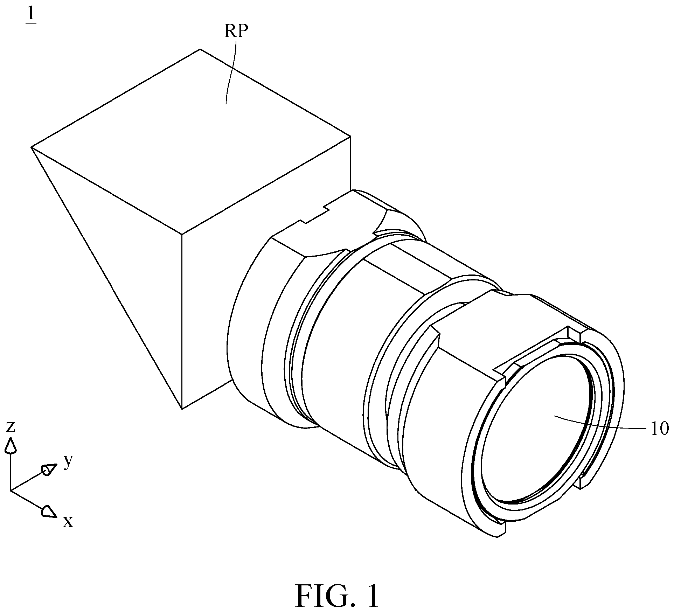

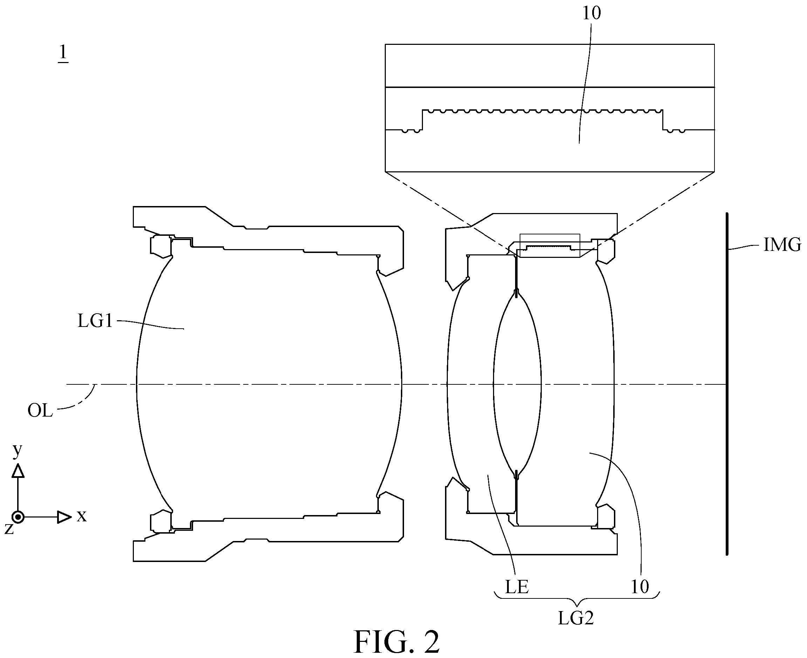

Fig. 1 is a perspective view of an imaging lens system according to the 1st embodiment of the present disclosure, Fig. 2 shows a cross-sectional view along with a partial enlarged view of the imaging lens system in Fig. 1, Fig. 3 shows a perspective view along with a partial enlarged view of an optical element of the imaging lens system in Fig. 1, Fig. 4 shows a cross-sectional view along with a partial enlarged view of the optical element in Fig. 3, Fig. 5 shows an image side view along with a partial enlarged view of the optical element in Fig. 3, Fig. 6 shows a top view along with a partial enlarged view of the optical element in Fig. 3, and Fig. 7 is a side view of the optical element in Fig. 3.

An imaging lens system 1 is provided in this embodiment. The imaging lens system 1 includes, in order from an object side to an image side along an optical path, a reflective prism RP, a first lens assembly LG1, a second lens assembly LG2 and an image surface IMG. Moreover, the reflective prism RP is configured to fold the optical path. The second lens assembly LG2 includes, in order from the object side to the image side along the optical path, a lens element LE and an optical element 10.

The optical element 10 is a light-transmitting element, and in this embodiment, the optical element 10 is specifically an optical lens element. The optical element 10 includes an optical effective portion 11 and a peripheral portion 12. The optical effective portion 11 includes an incident surface 111 and an exit surface 112. An imaging light enters the optical element 10 through the incident surface 111, and the imaging light exits the optical element 10 through the exit surface 112 and forms an image on the image surface IMG. In this embodiment, at least one of the incident surface 111 and the exit surface 112 is non-circular.

The peripheral portion 12 is located farther away from an optical axis OL of the imaging lens system 1 than the optical effective portion 11, and the peripheral portion 12 includes a plurality of connection surfaces 120, a reduction surface 121, a gate trace 122 and a plurality of air barriers 123. The connection surfaces 120 are connected to the incident surface 111 and the exit surface 112. The reduction surface 121 is adjacently connected to the connection surfaces 120, and the reduction surface 121 is located closer to the optical axis OL than the connection surfaces 120 adjacent to the reduction surface 121. The gate trace 122 is disposed on the reduction surface 121, and the air barriers 123 are disposed on the gate trace 122 on the reduction surface 121 and extend from the gate trace 122 on the reduction surface 121 to other areas of the reduction surface 121. Moreover, the air barriers 123 are recessed towards the optical axis OL from the surface(s) where the air barriers 123 are disposed (e.g., the surface of the gate trace 122 and the reduction surface 121).

Recessed shapes of the air barriers 123 are each a line-like form; more specifically, the recessed shapes are straight-line shapes. The line-like recessed shapes are each formed by a plurality of continuously arranged point-shaped recesses. Moreover, the air barriers 123 are arranged regularly along a first direction D1 and arranged regularly along a second direction D2 which is different from the first direction D1, and extension paths of some of the air barriers 123 intersect with extension paths of other of the air barriers 123. In this embodiment, the air barriers 123 form a grid-like pattern, and the area where the air barriers 123 are disposed covers the gate trace 122 and further extends onto the reduction surface 121 surrounding the gate trace 122.

As shown in Fig. 6, when a recessed width of each of the air barriers 123 is Wab, the following condition is satisfied: Wab = 0.02 mm.

Referring to Fig. 7, when an area of the reduction surface 121 is Ar, and a total area occupied by both the gate trace 122 and the air barriers 123 on the reduction surface 121 is Ag, the following conditions are satisfied: Ar = 2.78 mm$^2$; Ag = 1.57 mm$^2$; and Ag/Ar = 0.565.

As shown in Fig. 5, when a sweep angle of the gate trace 122 with the optical axis OL as a center is $\theta$g, the following condition is satisfied: $\theta$g = 30.1 degrees.

As shown in Fig. 5, when a maximum outer diameter of the optical element 10 in a direction perpendicular to the optical axis OL is D, and a shortest distance between the gate trace 122 and the exit surface 112 in the direction perpendicular to the optical axis OL is H, the following conditions are satisfied: D = 5.5 mm; H = 0.24 mm; and H/D = 0.04.

As shown in Fig. 4 and Fig. 5, when a thickness of the peripheral portion 12 in a direction parallel to the optical axis OL is ET, and the maximum outer diameter of the optical element 10 in the direction perpendicular to the optical axis OL is D, the following conditions are satisfied: ET = 1.56 mm; D = 5.5 mm; and D/ET = 3.53.

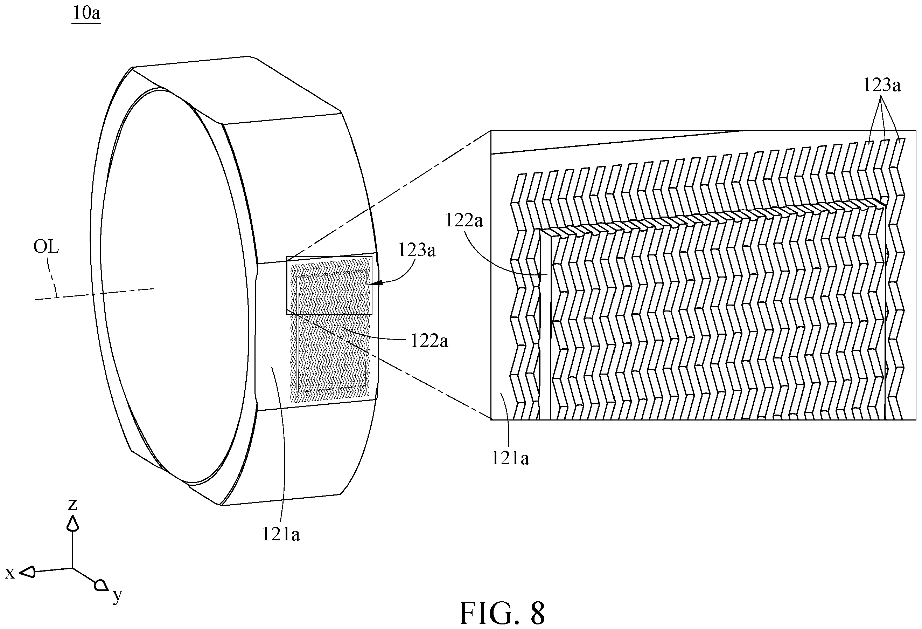

The present disclosure is not limited to the configuration of the recessed shapes of the air barriers 123 as described above. For example, please refer to Fig. 8 and Fig. 9, where Fig. 8 shows a perspective view along with a partial enlarged view of an optical element according to another configuration of the present disclosure, and Fig. 9 shows a side view along with a partial enlarged view of the optical element in Fig. 8. An optical element 10a provided in another configuration of the present disclosure is similar to the optical element 10 as described above. The same or similar reference numerals indicate the same or similar components, and functions and effects provided by those components are the same as described above, so an explanation in this regard will not be provided again.

As shown in Fig. 8 and Fig. 9, air barriers 123a are disposed on a gate trace 122a on a reduction surface 121a and extend from the gate trace 122a on the reduction surface 121a to other areas of the reduction surface 121a. Moreover, the air barriers 123a are recessed towards the optical axis OL from the surface(s) where the air barriers 123a are disposed.

Recessed shapes of the air barriers 123a are each a line-like form; more specifically, the recessed shapes are curved in a zigzag-shaped form. The line-like recessed shapes can be each formed by a plurality of continuously arranged point-shaped recesses. Moreover, the air barriers 123a are arranged regularly along a first direction D1, and the area where the air barriers 123a are disposed covers the gate trace 122a and further extends onto the reduction surface 121a surrounding the gate trace 122a.

As shown in Fig. 9, when a distance between adjacent two of the air barriers 123a is T1, the following condition is satisfied: T1 = 0.04 mm.

## 2nd Embodiment

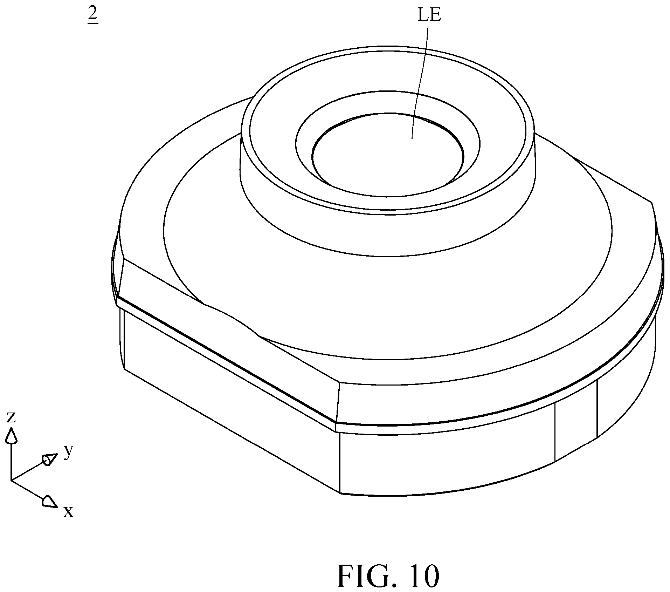

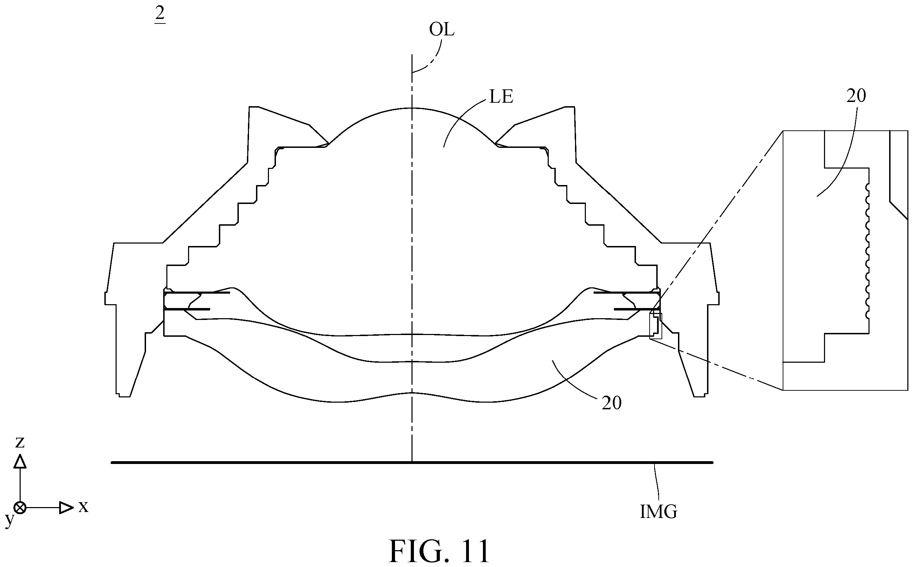

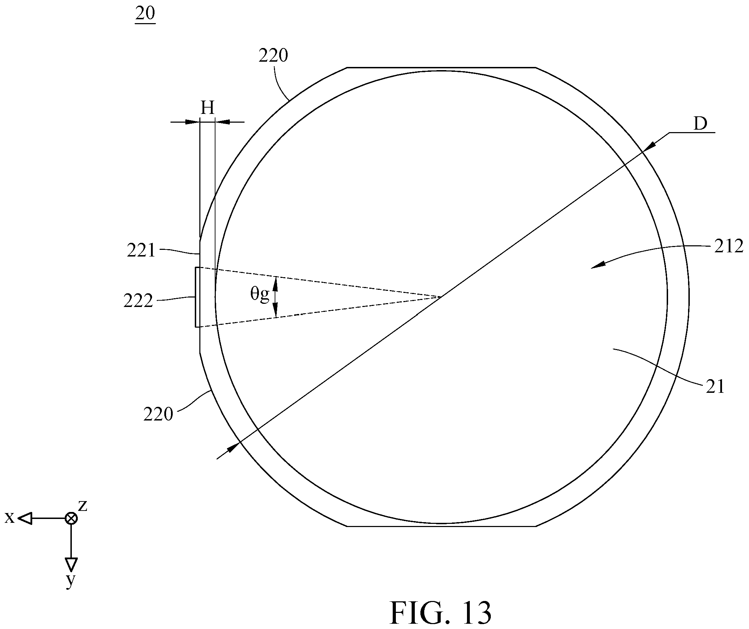

Fig. 10 is a perspective view of an imaging lens system according to the 2nd embodiment of the present disclosure, Fig. 11 shows a cross-sectional view along with a partial enlarged view of the imaging lens system in Fig. 10, Fig. 12 shows a perspective view along with a partial enlarged view of an optical element of the imaging lens system in Fig. 10, Fig. 13 is an image side view of the optical element in Fig. 12, Fig. 14 shows a side view along with a partial enlarged view of the optical element in Fig. 12, and Fig. 15 is a side view of the optical element in Fig. 12.

An imaging lens system 2 is provided in this embodiment. The imaging lens system 2 includes, in order from an object side to an image side along an optical path, a plurality of lens elements LE, an optical element 20 and an image surface IMG.

The optical element 20 is a light-transmitting element, and in this embodiment, the optical element 20 is specifically an optical lens element. The optical element 20 includes an optical effective portion 21 and a peripheral portion 22. The optical effective portion 21 includes an incident surface 211 and an exit surface 212. An imaging light enters the optical element 20 through the incident surface 211, and the imaging light exits the optical element 20 through the exit surface 212 and forms an image on the image surface IMG.

The peripheral portion 22 is located farther away from an optical axis OL of the imaging lens system 2 than the optical effective portion 21, and the peripheral portion 22 includes a plurality of connection surfaces 220, a reduction surface 221, a gate trace 222 and a plurality of air barriers 223. The connection surfaces 220 are connected to the incident surface 211 and the exit surface 212. The reduction surface 221 is adjacently connected to the connection surfaces 220, and the reduction surface 221 is located closer to the optical axis OL than the connection surfaces 220 adjacent to the reduction surface 221. The gate trace 222 is disposed on the reduction surface 221, and the air barriers 223 are disposed on the gate trace 222 on the reduction surface 221 and extend from the gate trace 222 on the reduction surface 221 to other areas of the reduction surface 221. Moreover, the air barriers 223 are recessed towards the optical axis OL from the surface(s) where the air barriers 223 are disposed (e.g., the surface of the gate trace 222 and the reduction surface 221).

Recessed shapes of the air barriers 223 are each a line-like form; more specifically, the recessed shapes are curved-line shapes. The line-like recessed shapes can be each formed by a plurality of continuously arranged point-shaped recesses. Moreover, the air barriers 223 are arranged regularly along a first direction D1.

As shown in Fig. 14, when a recessed width of each of the air barriers 223 is Wab, the following condition is satisfied: Wab = 0.015 mm.

Referring to Fig. 15, when an area of the reduction surface 221 is Ar, and a total area occupied by both the gate trace 222 and the air barriers 223 on the reduction surface 221 is Ag, the following conditions are satisfied: Ar = 0.762 mm$^2$; Ag = 0.267 mm$^2$; and Ag/Ar = 0.35.

As shown in Fig. 13, when a sweep angle of the gate trace 222 with the optical axis OL as a center is $\theta$g, the following condition is satisfied: $\theta$g = 14 degrees.

As shown in Fig. 13, when a maximum outer diameter of the optical element 20 in a direction perpendicular to the optical axis OL is D, and a shortest distance between the gate trace 222 and the exit surface 212 in the direction perpendicular to the optical axis OL is H, the following conditions are satisfied: D = 8 mm; H = 0.25 mm; and H/D = 0.03.

As shown in Fig. 14, when a minimum angle formed by each of the curved-line shapes of the air barriers 223 is $\theta$ab, the following condition is satisfied: $\theta$ab = 113.5 degrees.

The present disclosure is not limited to the configuration of the recessed shapes of the air barriers 223 as described above. The following provides various recessed shapes of air barriers according to five other configurations of the present disclosure. Air barriers 223a, 223b, 223c, 223d and 223e provided in the following configurations of the present disclosure are similar to the air barriers 223 as described above. The same or similar reference numerals indicate the same or similar components, and functions and effects provided by those components are the same as described above, so an explanation in this regard will not be provided again.

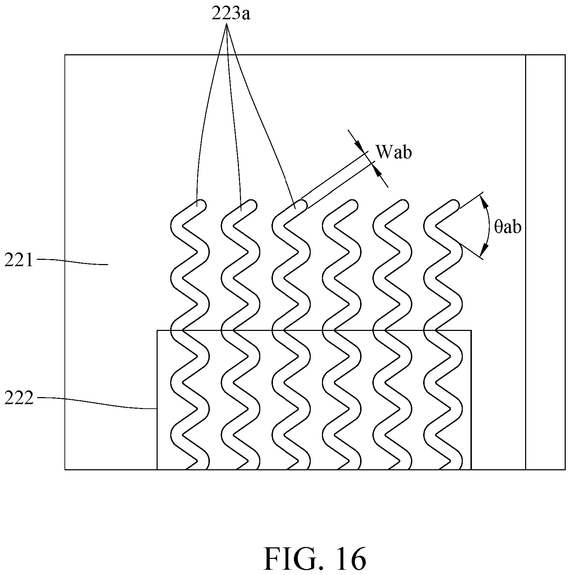

For example, please refer to Fig. 16, which shows a partial enlarged view of a peripheral portion of an optical element and its air barriers according to another configuration of the present disclosure. In one configuration of the present disclosure, when a recessed width of each of the air barriers 223a is Wab, the following condition is satisfied: Wab = 0.015 mm. In addition, when a minimum angle formed by each of the curved-line shapes of the air barriers 223a is θab, the following condition is satisfied: θab = 70 degrees.

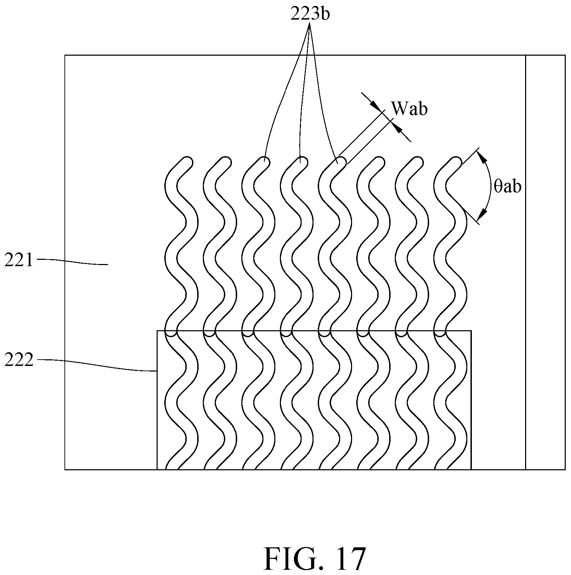

For another example, please refer to Fig. 17, which shows a partial enlarged view of a peripheral portion of an optical element and its air barriers according to another configuration of the present disclosure. In one configuration of the present disclosure, when a recessed width of each of the air barriers 223b is Wab, the following condition is satisfied: Wab = 0.015 mm. In addition, when a minimum angle formed by each of the curved-line shapes of the air barriers 223b is θab, the following condition is satisfied: θab = 90 degrees.

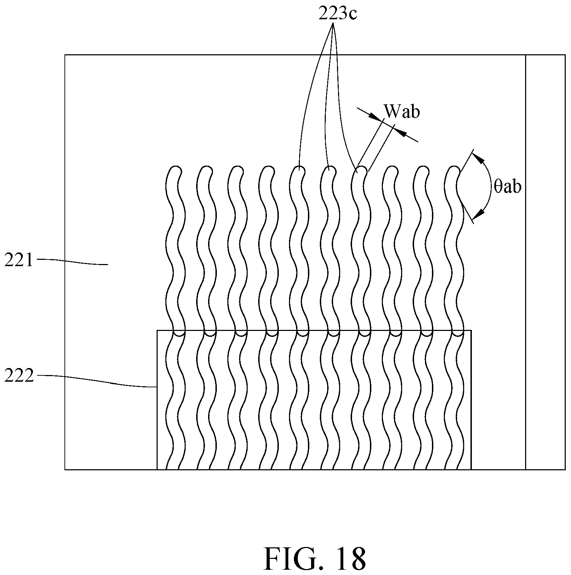

For another example, please refer to Fig. 18, which shows a partial enlarged view of a peripheral portion of an optical element and its air barriers according to another configuration of the present disclosure. In one configuration of the present disclosure, when a recessed width of each of the air barriers 223c is Wab, the following condition is satisfied: Wab = 0.015 mm. In addition, when a minimum angle formed by each of the curved-line shapes of the air barriers 223c is θab, the following condition is satisfied: θab = 121 degrees.

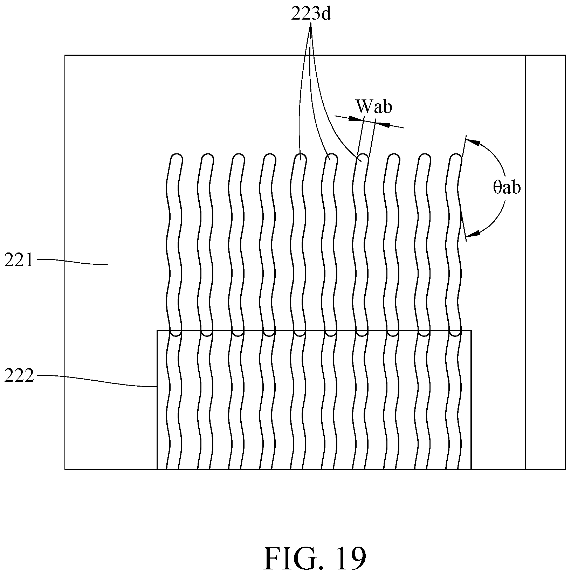

For another example, please refer to Fig. 19, which shows a partial enlarged view of a peripheral portion of an optical element and its air barriers according to another configuration of the present disclosure. In one configuration of the present disclosure, when a recessed width of each of the air barriers 223d is Wab, the following condition is satisfied: Wab = 0.015 mm. In addition, when a minimum angle formed by each of the curved-line shapes of the air barriers 223d is θab, the following condition is satisfied: θab = 160 degrees.

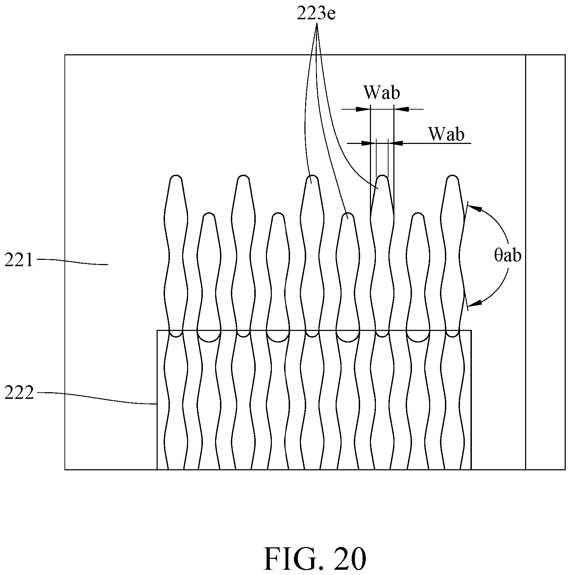

For another example, please refer to Fig. 20, which shows a partial enlarged view of a peripheral portion of an optical element and its air barriers according to another configuration of the present disclosure. In one configuration of the present disclosure, a recessed width of each of the air barriers 223e is non-uniform. When the recessed width of each of the air barriers 223e is Wab, the following condition is satisfied: $0.015 \text{ mm} \leq \text{Wab} \leq 0.03 \text{ mm}$. Moreover, a maximum recessed width of each of the air barriers 223e is 0.03 mm, and a minimum recessed width of each of the air barriers 223e is 0.015 mm. In addition, when a minimum angle formed by each of the curved-line shapes of the air barriers 223e is θab, the following condition is satisfied: θab = 160 degrees.

## 3rd Embodiment

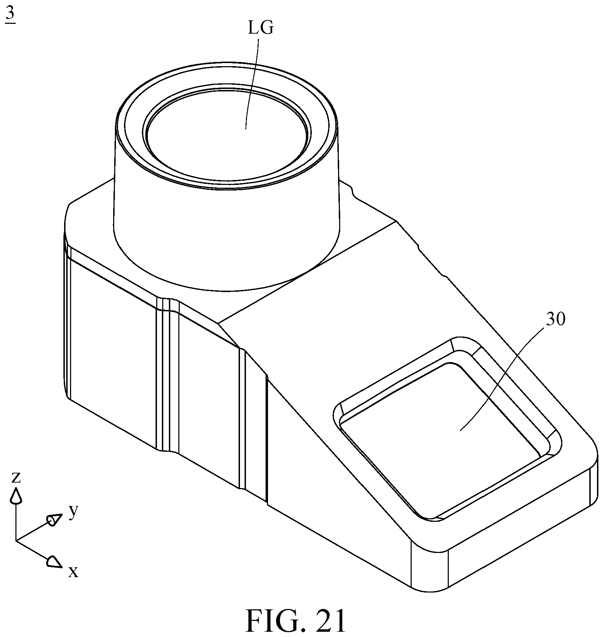

Fig. 21 is a perspective view of an imaging lens system according to the 3rd embodiment of the present disclosure, Fig. 22 shows a cross-sectional view of the imaging lens system in Fig. 21, Fig. 23 shows a perspective view along with a partial enlarged view of an optical element of the imaging lens system in Fig. 21, and Fig. 24 shows a side view along with a partial enlarged view of the optical element in Fig. 23.

An imaging lens system 3 is provided in this embodiment. The imaging lens system 3 includes, in order from an object side to an image side along an optical path, a lens assembly LG, an optical element 30 and an image surface IMG.

The optical element 30 is a light-transmitting element, and in this embodiment, the optical element 30 is specifically an optical reflective prism configured to fold the optical path. The optical element 30 includes an optical effective portion 31 and a peripheral portion 32. The optical effective portion 31 includes, in order from the object side to the image side along the optical path, an incident surface 311, a plurality of reflection surfaces 313 and an exit surface 312. An imaging light enters the optical element 30 through the incident surface 311, changes its travelling direction by the reflection surfaces 313, exits the optical element 30 through the exit surface 312 and forms an image on the image surface IMG.

The peripheral portion 32 is located farther away from an optical axis OL of the imaging lens system 3 than the optical effective portion 31, and the peripheral portion 32 includes a plurality of connection surfaces 320, a gate trace 322 and a plurality of air barriers 323. The connection surfaces 320 are connected to the incident surface 311, the reflection surfaces 313 and the exit surface 312. The gate trace 322 is disposed on one of the connection surfaces 320, and the air barriers 323 are disposed on the gate trace 322 on the connection surface 320 and extend from the gate trace 322 on the connection surface 320 to other areas of the connection surface 320. Moreover, the air barriers 323 are recessed towards the optical axis OL from the surface(s) where the air barriers 323 are disposed (e.g., the surface of the gate trace 322 and the connection surface 320).

Recessed shapes of the air barriers 323 are each a point-like form; more specifically, the recessed shapes are each a circular point-like form. Moreover, the air barriers 323 are arranged regularly along a first direction D1 and arranged regularly along a second direction D2 which is different from the first direction D1. In this embodiment, the area where the air barriers 323 are disposed covers the gate trace 322 and further extends onto the connection surface 320 surrounding the gate trace 322.

As shown in Fig. 24, when a recessed width of each of the air barriers 323 is Wab, the following condition is satisfied: Wab = 0.06 mm.

## 4th Embodiment

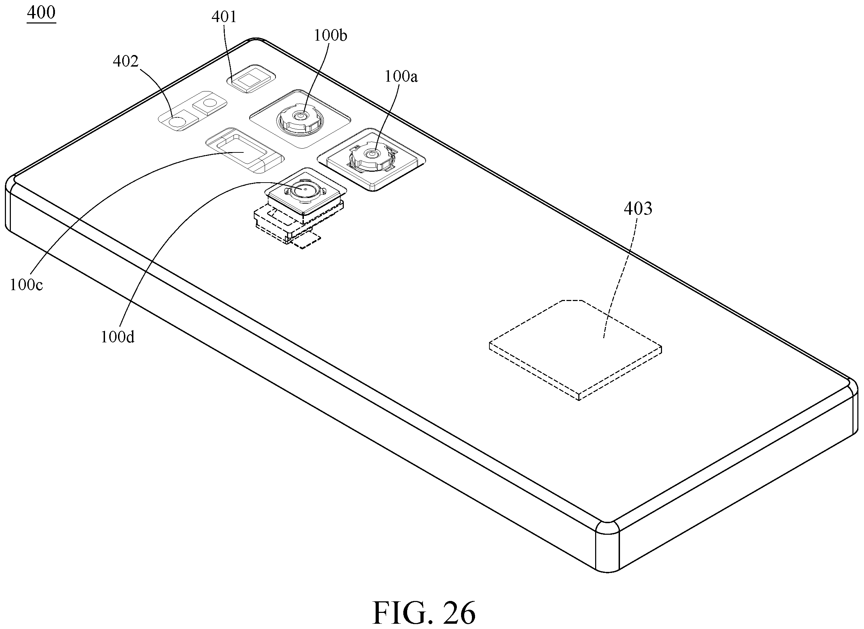

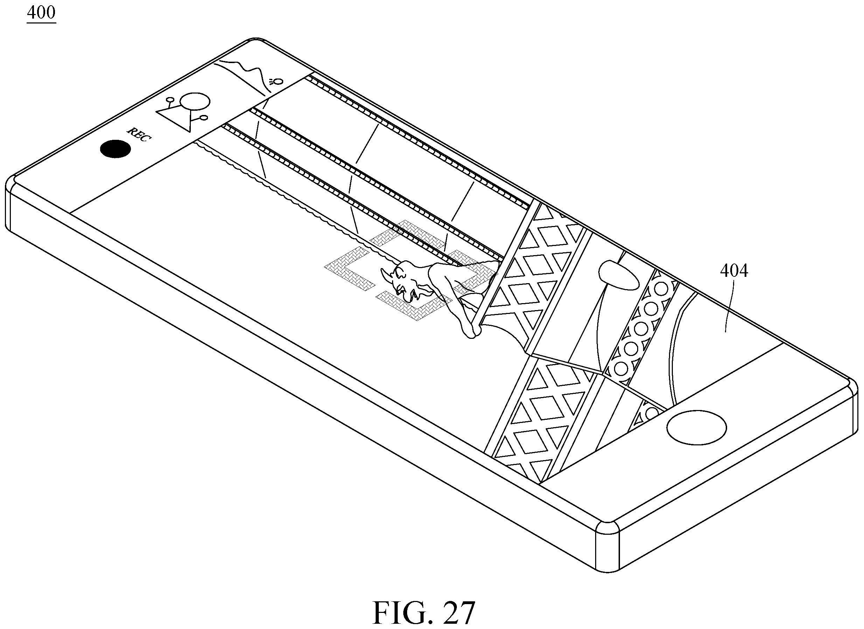

Fig. 26 is a perspective view of an electronic device according to the 4th embodiment of the present disclosure, and Fig. 27 is another perspective view of the electronic device in Fig. 26.

In this embodiment, the electronic device 400 is a smartphone including a plurality of imaging lens systems, a flash module 401, a focus assist module 402, an image signal processor 403, a display module (user interface) 404 an image software processor (not shown) and an image sensor (not shown).

These imaging lens systems include an ultra-wide-angle imaging lens system 100a, a high pixel imaging lens system 100b, a telephoto imaging lens system 100c and a telephoto imaging lens system 100d. Moreover, the high pixel imaging lens system 100b includes, for example, the imaging lens system 1 as disclosed in the 1st embodiment and an image sensor (not shown), the telephoto imaging lens system 100c includes, for example, the imaging lens system 2 as disclosed in the 2nd embodiment and an image sensor (not shown), the telephoto imaging lens system 100d includes, for example, the imaging lens system 3 as disclosed in the 3rd embodiment and an image sensor (not shown), and the image sensors are disposed on the image surfaces IMG of the imaging lens system 1, 2 and 3, respectively. Moreover, the ultra-wide-angle imaging lens system 100a can also include the imaging lens system of the present disclosure, but the present disclosure is not limited thereto.

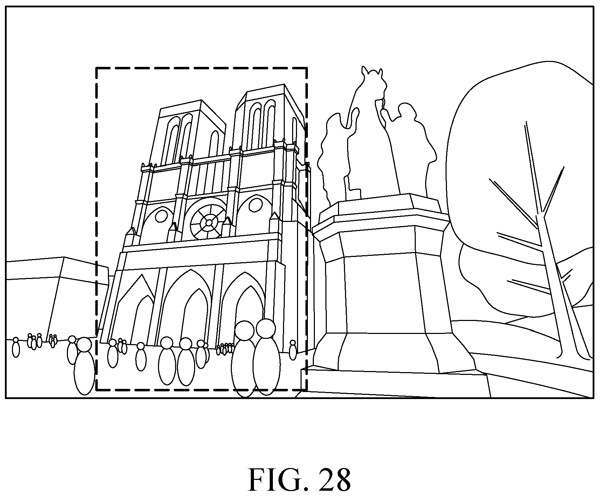

The image captured by the ultra-wide-angle imaging lens system 100a enjoys a feature of multiple imaged objects. Fig. 28 is an image captured by the ultra-wide-angle imaging lens system 100a.

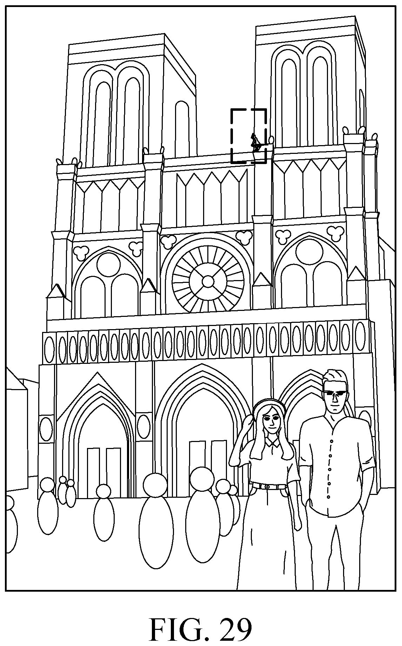

The image captured by the high pixel imaging lens system 100b enjoys a feature of high resolution and less distortion, and the high pixel imaging lens system 100b can capture part of the image in Fig. 28. Fig. 29 is an image captured by the high pixel imaging lens system 100b.

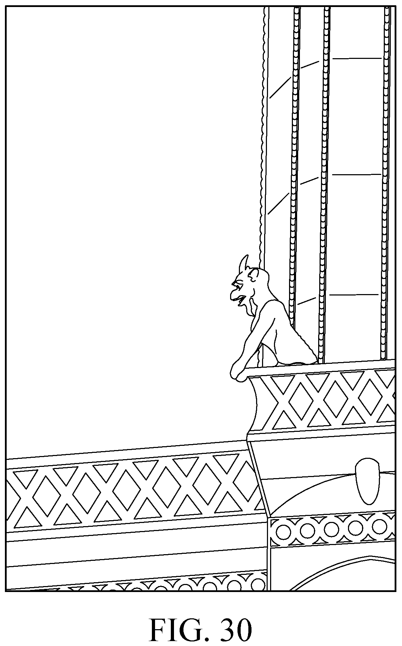

The image captured by the telephoto imaging lens system 100c or the telephoto imaging lens system 100d enjoys a feature of high optical magnification, and the telephoto imaging lens system 100c or the telephoto imaging lens system 100d can capture part of the image in Fig. 29. Fig. 30 is an image captured by the telephoto imaging lens system 100c or the telephoto imaging lens system 100d. Moreover, the maximum field of view of the imaging lens system corresponds to the field of view in Fig. 30.

When a user captures images of an object, the light rays converge in the ultra-wide-angle imaging lens system 100a, the high pixel imaging lens system 100b, the telephoto imaging lens system 100c or the telephoto imaging lens system 100d to generate images, and the flash module 401 is activated for light supplement. The focus assist module 402 detects the object distance of the imaged object to achieve fast auto focusing. The image signal processor 403 is configured to optimize the captured image to improve image quality and provided zooming function. The light beam emitted from the focus assist module 402 can be either conventional infrared or laser. The display module 404 can include a touch screen, and the user is able to interact with the display module 404 to adjust the angle of view and switch between different imaging lens systems, and the image software processor having multiple functions to capture images and complete image processing. Alternatively, the user may capture images via a physical button. The image processed by the image software processor can be displayed on the display module 404.

## 5th Embodiment

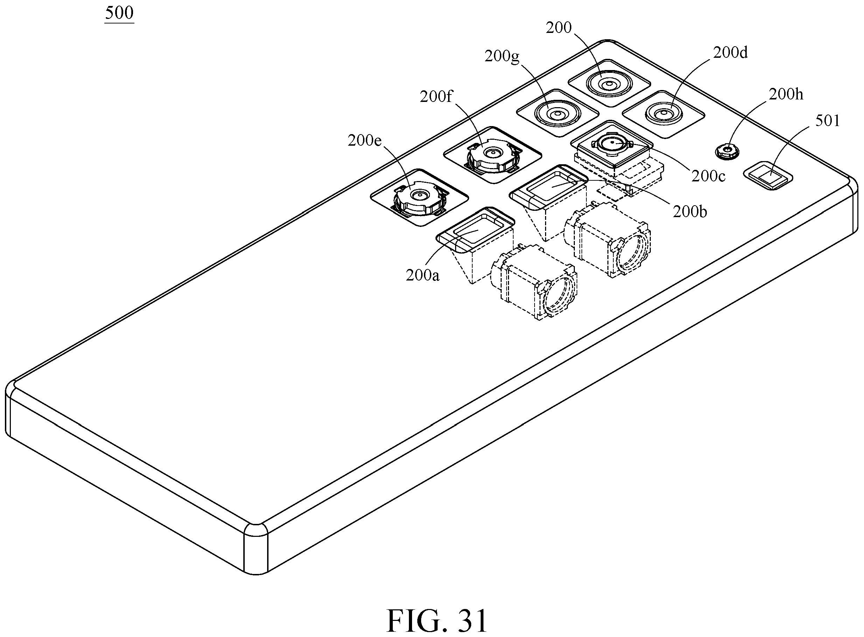

Please refer to Fig. 31, which is a perspective view of an electronic device according to the 5th embodiment of the present disclosure.

In this embodiment, the electronic device 500 is a smartphone including an imaging lens system 200, an imaging lens system 200a, an imaging lens system 200b, an imaging lens system 200c, an imaging lens system 200d, an imaging lens system 200e, an imaging lens system 200f, an imaging lens system 200g, an imaging lens system 200h, a flash module 501, an image signal processor, a display module and an image software processor (not shown). The imaging lens system 200, the imaging lens system 200a, the imaging lens system 200b, the imaging lens system 200c, the imaging lens system 200d, the imaging lens system 200e, the imaging lens system 200f, the imaging lens system 200g and the imaging lens system 200h are disposed on the same side of the electronic device 500, while the display module is disposed on the opposite side of the electronic device 500. In addition, the imaging lens system 200c includes, for example, the imaging lens system 1 as disclosed in the 1st embodiment and an image sensor (not shown), and the image sensor is disposed on the image surface IMG of the imaging lens system 1. Moreover, the imaging lens systems 200, 200a, 200b, 200d, 200e, 200f, 200g and 200h can also include the imaging lens system of the present disclosure, but the present disclosure is not limited thereto.

The imaging lens system 200 is an ultra-wide-angle imaging lens system, the imaging lens system 200a is a telephoto imaging lens system, the imaging lens system 200b is a telephoto imaging lens system, the imaging lens system 200c is a telephoto imaging lens system, the imaging lens system 200d is a telephoto imaging lens system, the imaging lens system 200e is a wide-angle imaging lens system, the imaging lens system 200f is a wide-angle imaging lens system, the imaging lens system 200g is a ultra-wide-angle imaging lens system, and the imaging lens system 200h is a ToF (time of flight) imaging lens system. In this embodiment, the imaging lens system 200, the imaging lens system 200a, the imaging lens system 200b, the imaging lens system 200c, the imaging lens system 200d, the imaging lens system 200e, the imaging lens system 200f and the imaging lens system 200g have different fields of view, such that the electronic device 500 can have various magnification ratios so as to meet the requirement of optical zoom functionality. In addition, the imaging lens system 200a and imaging lens system 200b are telephoto imaging lens systems having a light-folding element configuration. Furthermore, the imaging lens system 200h can determine depth information of the imaged object. In this embodiment, the electronic device 500 includes multiple imaging lens systems 200, 200a, 200b, 200c, 200d, 200e, 200f, 200g and 200h, but the present disclosure is not limited to the number and arrangement of imaging lens systems. When a user captures images of an object, the light rays converge in the imaging lens system 200, the imaging lens system 200a, the imaging lens system 200b, the imaging lens system 200c, the imaging lens system 200d, the imaging lens system 200e, the imaging lens system 200f, the imaging lens system 200g or the imaging lens system 200h to generate an image(s), and the flash module 501 is activated for light supplement. Further, the subsequent processes are performed in a manner similar to the abovementioned embodiments, so the details in this regard will not be provided again.

### 6th Embodiment

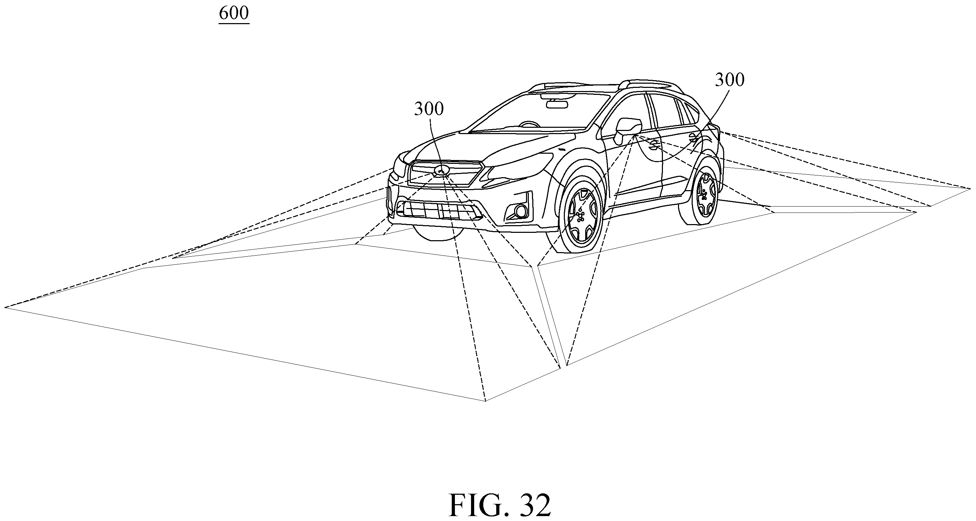

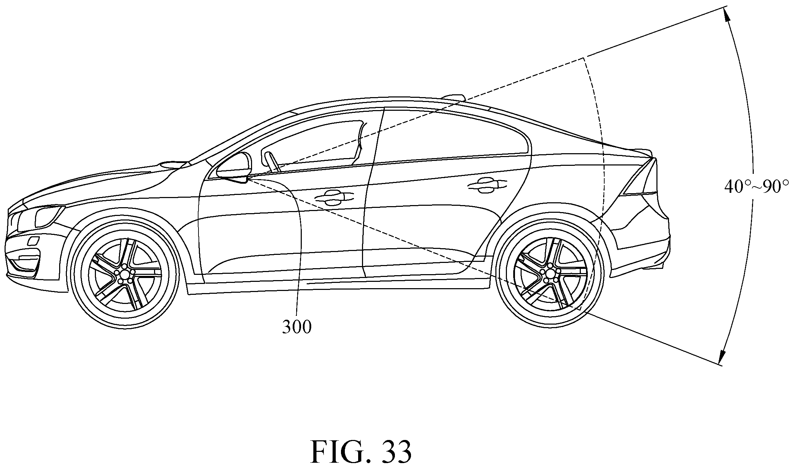

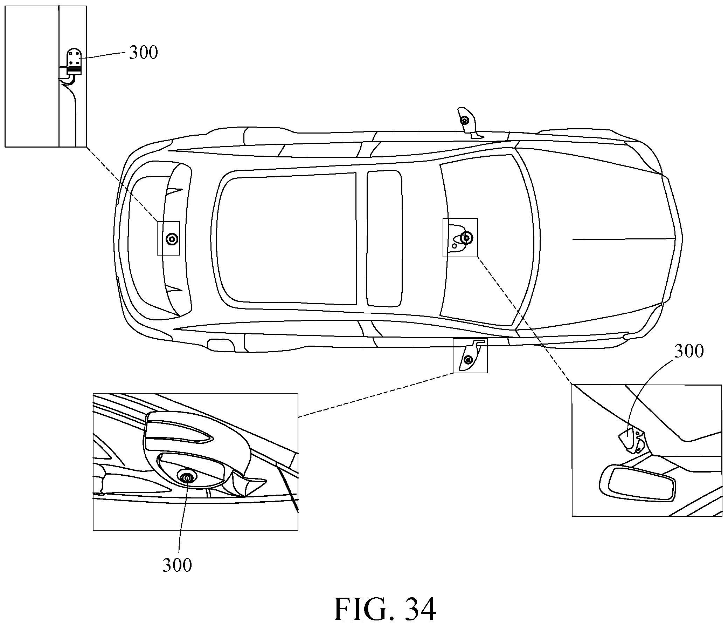

Fig. 32 is a perspective view of an electronic device according to the 6th embodiment of the present disclosure, Fig. 33 is a side view of the electronic device in Fig. 40, and Fig. 34 is a top view of the electronic device in Fig. 32.

In this embodiment, the electronic device 600 is an automobile. The electronic device 600 includes a plurality of automotive imaging lens systems 300, and the imaging lens systems 300 each include the imaging lens system of the present disclosure. The imaging lens systems 300 can serve as, for example, panoramic view car cameras, dashboard cameras and vehicle backup cameras.

As shown in Fig. 32, the imaging lens systems 300 are, for example, disposed around the automobile to capture peripheral images of the automobile, which is favorable for obtaining external traffic information to support autopilot functionality. Additionally, the image processor can stitch these peripheral images into a panoramic view, allowing the driver to monitor every corner around the automobile, which is useful for parking and driving.

As shown in Fig. 33, the imaging lens systems 300 are, for example, respectively disposed on the lower portion of the side mirrors. A maximum field of view of the imaging lens systems 300 can be 40 degrees to 90 degrees for capturing images in regions on left and right lanes.

As shown in Fig. 34, the imaging lens systems 300 can also be, for example, respectively disposed on the lower portion of the side mirrors and inside the front and rear windshields for providing external information to the driver, and also providing more viewing angles so as to reduce blind spots, thereby improving driving safety.

The smartphones, panoramic view car cameras, dashboard cameras and vehicle backup cameras in the embodiments are only exemplary for showing the imaging lens system of the present disclosure installed in an electronic device, and the present disclosure is not limited thereto. The imaging lens system can be optionally applied to optical systems with a movable focus. Furthermore, the imaging lens system features good capability in aberration corrections and high image quality, and can be applied to 3D (three-dimensional) image capturing applications, in products such as digital cameras, mobile devices, digital tablets, smart televisions, network surveillance devices, multi-camera devices, image recognition systems, motion sensing input devices, wearable devices and other electronic imaging devices.

The foregoing description, for the purpose of explanation, has been described with reference to specific embodiments. It is to be noted that the present disclosure shows different data of the different embodiments; however, the data of the different embodiments are obtained from experiments. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the present disclosure to the precise forms disclosed. Many modifications and variations are possible in view of the above teachings.

**Claims**

1. An imaging lens system (1) comprising:

   an optical element (10) being a light-transmitting element, and the optical element (10) comprising:

   an optical effective portion (11) comprising:

   an incident surface (111), wherein an imaging light enters the optical element (10) through the incident surface (111); and
   an exit surface (112), wherein the imaging light exits the optical element (10) through the exit surface (112); and

   a peripheral portion (12) located farther away from an optical axis (OL) of the imaging lens system (1) than the optical effective portion (11), and the peripheral portion (12) comprising:

   at least one connection surface (120) connected to the incident surface (111) and the exit surface (112);
   a reduction surface (121) adjacently connected to the at least one connection surface (120) and located closer to the optical axis (OL) than the at least one connection surface (120);
   a gate trace (122) disposed on the reduction surface (121); and
   a plurality of air barriers (123) disposed at least on the gate trace (122) and recessed toward the optical axis (OL);

   wherein recessed shapes of the plurality of air barriers (123) comprise at least one of a point-like form and a line-like form, a recessed width of each of the plurality of air barriers (123) is Wab, and the following condition is satisfied:

   $$0.008 \text{ mm} \leq Wab \leq 0.07 \text{ mm}.$$

   .

2. The imaging lens system (1) of claim 1, wherein the plurality of air barriers (123) are arranged regularly along a first direction (D1).

3. The imaging lens system (2) of claim 2, wherein the recessed shapes of the plurality of air barriers (223) are curved-line shapes.

4. The imaging lens system (2) of claim 3, wherein a minimum angle formed by each of the curved-line shapes of the plurality of air barriers (223) is θab, and the following condition is satisfied:

   $$50 \text{ degrees} < \theta ab < 180 \text{ degrees}.$$

5. The imaging lens system (1) of claim 2, wherein the plurality of air barriers (123) are further arranged regularly along a second direction (D2) which is different from the first direction (D1).

6. The imaging lens system (1) of claim 5, wherein extension paths of at least two of the plurality of air barriers (123) intersect with each other.

7. The imaging lens system (1) of claim 1, wherein the recessed width of each of the plurality of air barriers (123) is Wab, and the following condition is satisfied:

   $$0.012 \text{ mm} \leq Wab \leq 0.05 \text{ mm}.$$

8. The imaging lens system (1) of claim 1, wherein the recessed shapes of the plurality of air barriers (123) are each a line-like form, formed by a plurality of continuously arranged point-shaped recesses.

9. The imaging lens system (1) of claim 1, wherein the plurality of air barriers (123) extend from the gate trace (122) on the reduction surface (121) to other areas of the reduction surface (121) or to the at least one connection surface (120).

10. The imaging lens system (1) of claim 1, wherein an area of the reduction surface (121) is Ar, a total area occupied by both the gate trace (122) and the plurality of air barriers (123) on the reduction surface (121) is Ag, and the following condition is satisfied:

$$0.2 < Ag/Ar \leq 1.$$

11. The imaging lens system (1) of claim 1, wherein a maximum outer diameter of the optical element (10) in a direction perpendicular to the optical axis (OL) is D, a shortest distance between the gate trace (122) and the exit surface (112) in the direction perpendicular to the optical axis (OL) is H, and the following condition is satisfied:

$$0.01 < H/D < 0.2.$$

12. The imaging lens system (1) of claim 1, wherein a thickness of the peripheral portion (12) in a direction parallel to the optical axis (OL) is ET, a maximum outer diameter of the optical element (10) in a direction perpendicular to the optical axis (OL) is D, and the following condition is satisfied:

$$1.6 < D/ET < 8.8.$$

13. The imaging lens system (1) of claim 1, wherein at least one of the incident surface (111) and the exit surface (112) is non-circular.

14. The imaging lens system (1) of claim 1, wherein a sweep angle of the gate trace (122) with the optical axis (OL) as a center is $\theta g$, and the following condition is satisfied:

$$14 \text{ degrees} \leq \theta g \leq 45 \text{ degrees.}$$

15. The imaging lens system (3) of claim 1, wherein the optical effective portion (31) further comprises a reflection surface (313) configured to change a travelling direction of the imaging light.

16. An electronic device (400) comprising:
the imaging lens system (1) of claim 1.

17. An imaging lens system (1) comprising:
an optical element (10) being a light-transmitting element, and the optical element (10) comprising:

an optical effective portion (11) comprising:

an incident surface (111), wherein an imaging light enters the optical element (10) through the incident surface (111); and
an exit surface (112), wherein the imaging light exits the optical element (10) through the exit surface (112); and

a peripheral portion (12) located farther away from an optical axis (OL) of the imaging lens system (1) than the optical effective portion (11), and the peripheral portion (12) comprising:

at least one connection surface (120) connected to the incident surface (111) and the exit surface (112); and a plurality of air barriers (123) disposed on at least part of surfaces of the peripheral portion (12) and recessed toward the optical axis (OL) from the at least part of the surfaces of the peripheral portion (12);

wherein recessed shapes of the plurality of air barriers (123) comprise at least one of a point-like form and a line-like form.

18. The imaging lens system (1) of claim 17, wherein the plurality of air barriers (123) are arranged regularly along a first direction (D1).

19. The imaging lens system (2) of claim 18, wherein the recessed shapes of the plurality of air barriers (223) are curved-line shapes.

20. The imaging lens system (2) of claim 19, wherein a minimum angle formed by each of the curved-line shapes of the plurality of air barriers (223) is θab, and the following condition is satisfied:

$$50 \text{ degrees} < \theta ab < 180 \text{ degrees}.$$

21. The imaging lens system (1) of claim 18, wherein the plurality of air barriers (123) are further arranged regularly along a second direction (D2) which is different from the first direction (D1).

22. The imaging lens system (1) of claim 21, wherein extension paths of at least two of the plurality of air barriers (123) intersect with each other.

23. The imaging lens system (1) of claim 18, wherein a recessed width of each of the plurality of air barriers (123) is Wab, and the following condition is satisfied:

$$0.008 \text{ mm} \leq Wab \leq 0.07 \text{ mm}.$$

.

24. The imaging lens system (1) of claim 23, wherein the recessed width of each of the plurality of air barriers (123) is Wab, and the following condition is satisfied:

$$0.012 \text{ mm} \leq Wab \leq 0.05 \text{ mm}.$$

25. The imaging lens system (1) of claim 17, wherein the recessed shapes of the plurality of air barriers (123) are each a line-like form, formed by a plurality of continuously arranged point-shaped recesses.

26. The imaging lens system (1) of claim 17, wherein the peripheral portion (12) further comprises a reduction surface (121) adjacently connected to the at least one connection surface (120) and located closer to the optical axis (OL) than the at least one connection surface (120), and the plurality of air barriers (123) are disposed on the reduction surface (121).

27. The imaging lens system (3) of claim 17, wherein the peripheral portion (32) further comprises a gate trace (322) disposed on the at least one connection surface (320), and the plurality of air barriers (323) are disposed on the at least one connection surface (320).

28. The imaging lens system (1) of claim 27, wherein a sweep angle of the gate trace (122) with the optical axis (OL) as a center is θg, and the following condition is satisfied:

14 degrees < θg < 45 degrees.

29. The imaging lens system (1) of claim 27, wherein a maximum outer diameter of the optical element (10) in a direction perpendicular to the optical axis (OL) is D, a shortest distance between the gate trace (122) and the exit surface (112) in the direction perpendicular to the optical axis (OL) is H, and the following condition is satisfied:

$$0.01 < H/D < 0.2.$$

30. The imaging lens system (1) of claim 29, wherein a thickness of the peripheral portion (12) in a direction parallel to the optical axis (OL) is ET, the maximum outer diameter of the optical element (10) in the direction perpendicular to the optical axis (OL) is D, and the following condition is satisfied:

$$1.6 < D/ET < 8.8.$$

.

31. The imaging lens system (1) of claim 30, wherein at least one of the incident surface (111) and the exit surface (112) is non-circular.

32. The imaging lens system (3) of claim 17, wherein the optical effective portion (31) further comprises a reflection surface (313) configured to change a travelling direction of the imaging light.

33. An electronic device (400) comprising:
the imaging lens system (1) of claim 17.

RP

1

10

FIG. 1

z

y

x

FIG. 2

EP 4 592 726 A2

FIG. 3

FIG. 4

FIG. 5

EP 4 592 726 A2

FIG. 6

EP 4 592 726 A2

FIG. 7

FIG. 8

EP 4 592 726 A2

FIG. 9

EP 4 592 726 A2

LE

z

y

x

**FIG. 10**

EP 4 592 726 A2

FIG. 11

EP 4 592 726 A2

FIG. 12

EP 4 592 726 A2

FIG. 13

EP 4 592 726 A2

FIG. 14

FIG. 15

EP 4 592 726 A2

FIG. 16

EP 4 592 726 A2

FIG. 17

FIG. 18

EP 4 592 726 A2

FIG. 19

FIG. 20

EP 4 592 726 A2

FIG. 21

EP 4 592 726 A2

FIG. 22

FIG. 23

EP 4 592 726 A2

FIG. 24

EP 4 592 726 A2

FIG. 25

EP 4 592 726 A2

FIG. 26

EP 4 592 726 A2

FIG. 27

EP 4 592 726 A2

FIG. 28

FIG. 29

FIG. 30

FIG. 31

FIG. 32

600

300

40°~90°

300

FIG. 33

FIG. 34